# EUROPEAN PATENT SPECIFICATION

(11) **EP 4 207 053 B1**
(45) Date of publication and mention of the grant of the patent: **18.11.2026**
(21) Application number: 21879088.9
(22) Date of filing: 12.08.2021
(51) Int. Cl.: G06V 40/16, G06V 10/82, G06V 10/44, G06N 3/084, G06N 3/08, G06N 3/04, G06N 3/045, G06V 10/774, G06T 5/00

(54) **OCCLUSION DETECTION MODEL TRAINING METHOD AND FACIAL IMAGE BEAUTIFICATION METHOD**
TRAININGSVERFAHREN FÜR OKKLUSIONSERKENNUNGSMODELL UND VERFAHREN ZUR VERSCHÖNERUNG VON GESICHTSBILDERN
PROCÉDÉ D'ENTRAÎNEMENT DE MODÈLE DE DÉTECTION D'OCCLUSION ET PROCÉDÉ D'EMBELLISSEMENT D'IMAGE FACIALE

(30) Priority: 16.10.2020 CN 202011111254
(43) Date of publication of application: 05.07.2023
(73) Proprietor: Shanghai Bilibili Technology Co., Ltd., Yangpu District Shanghai 200433 (CN)
(72) Inventor: LI, Dianbo, Shanghai 200433 (CN)
(74) Representative: Ostertag & Partner Patentanwälte mbB
(86) International application number: PCT/CN2021/112308
(87) International publication number: WO 2022/078041

(56) References cited:
- CN-A- 105 095 856
- CN-A- 110 728 330
- CN-A- 110 826 519
- CN-A- 111 027 504
- CN-A- 112 419 170
- US-A1- 2019 371 080
- US-A1- 2022 058 426
- LV JIANG-JING ET AL: "Data augmentation for face recognition", ARXIV,, vol. 230, 8 December 2016 (2016-12-08), pages 184 - 196, XP029902165, DOI: 10.1016/J.NEUCOM.2016.12.025
- YU-HUI LEE ET AL: "ByeGlassesGAN: Identity Preserving Eyeglasses Removal for Face Images", ARXIV.ORG, CORNELL UNIVERSITY LIBRARY, 201 OLIN LIBRARY CORNELL UNIVERSITY ITHACA, NY 14853, 25 August 2020 (2020-08-25), XP081748102

## Description

### TECHNICAL FIELD

This application relates to the field of image processing technologies, and in particular, to an occlusion detection model training method, a face image beautification processing method applied to the occlusion detection model, an occlusion detection model training apparatus, a face image beautification processing apparatus, and a computer-readable medium.

### BACKGROUND

Currently, a detection technology for a key point in a face image is increasingly developed. A conventional SDM, a 3000FPS method, and a recently developed key point detection method based on deep learning have reached new heights in terms of a detection speed and precision. However, the inventor finds that existing face key point detection is performed based on that the face image does not include any occlusion object. In a case in which the occlusion object is included, in the conventional technology, the occlusion object cannot be accurately determined. Consequently, accuracy of the face key point detection is affected.

### SUMMARY

An objective of this application is to provide a technical solution that can accurately determine whether a key point in a face image is occluded, to resolve the foregoing problem in the conventional technology.

The present invention is defined in the independent claims. Particular embodiments are set out in the respective dependent claims.

To implement the foregoing objective, this application provides an occlusion detection model training method including the steps listed in claim 1.

To implement the foregoing objective, this application further provides a face image beautification processing method including the steps listed in claim 5.

To implement the foregoing objective, this application further provides an occlusion detection model training apparatus including the means listed in claim 6.

To implement the foregoing objective, this application further provides a face image beautification processing apparatus including the means listed in claim 8.

To implement the foregoing objective, this application further provides a computer device, including a memory, a processor, and computer-readable instructions that are stored in the memory and that are capable of being run by the processor. The processor executes the computer-readable instructions to implement the steps listed in claim 1.

To implement the foregoing objective, this application further provides a computer-readable storage medium. The computer-readable storage medium stores computer-readable instructions, and the computer-readable instructions are executed by a processor to implement the steps listed in claim 1.

Based on the occlusion detection model training method and the face image beautification processing method that are provided in this application, whether the key point in the face image is occluded can be accurately recognized, and based on this, corresponding beautification processing is performed on the face image. In this application, a face image added with an occlusion object is constructed based on an existing single face image and a single occlusion object image, and a key point position in the face image with the occlusion object and whether each key point is occluded are marked. A neural network model is trained by using the constructed face image with the occlusion object and corresponding marking data, to obtain the occlusion detection model that can accurately predict whether a key point in a face is occluded. Further, corresponding beautification processing is performed on different positions of the face image by using a detection result of the occlusion detection model. This can effectively improve accuracy and authenticity of face image recognition, and improve user experience.

### BRIEF DESCRIPTION OF DRAWINGS

FIG. 1 is a flowchart of an occlusion detection model training method according to Embodiment 1 of this application;
FIG. 2 is a schematic flowchart of constructing training sample data according to Embodiment 1 of this application;
FIG. 3 is a schematic flowchart of synthesizing a first face image according to Embodiment 1 of this application;
FIG. 4 is another schematic flowchart of synthesizing a first face image according to Embodiment 1 of this application;
FIG. 5 is a schematic network diagram of synthesizing a first face image by using an encoder and a decoder according to Embodiment 1 of this application;
FIG. 6 is a schematic flowchart of training a first encoder, a second encoder, and a decoder according to Embodiment 1 of this application;
FIG. 7 is a schematic flowchart of training an occlusion detection model according to Embodiment 1 of this application;
FIG. 8 is a schematic diagram of a structure of a first neural network and a second neural network according to Embodiment 1 of this application;
FIG. 9 is a schematic diagram of a program means of an occlusion detection model training apparatus according to Embodiment 1 of this application;
FIG. 10 is a schematic diagram of a hardware structure of an occlusion detection model training apparatus according to Embodiment 1 of this application;
FIG. 11 is a schematic flowchart of a face image beautification processing method according to Embodiment 2 of this application; and
FIG. 12 is a schematic diagram of a program means of a face image beautification processing apparatus according to Embodiment 2 of this application.

### DETAILED DESCRIPTION

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application. All other embodiments obtained by a person of ordinary skill in the art based on the embodiments of this application without creative efforts shall fall within the protection scope of this application.

### Embodiment 1

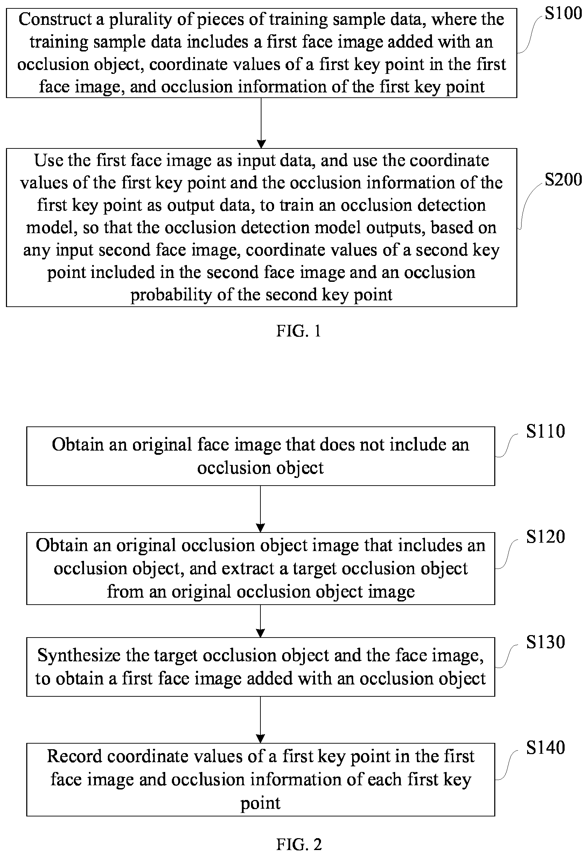

Referring to FIG. 1, this embodiment provides an occlusion detection model training method, including the following steps:
S100: Construct training sample data, where the training sample data includes a first face image added with an occlusion object, coordinate values of a first key point in the first face image, and occlusion information of the first key point.

Currently, a quantity of disclosed face image key point data sets is limited, and a case in which an occlusion object is included is excessively rare. However, in actual life, people often wear protective products such as a hat, glasses, and a mask when photographing an image. These protective products may cause occlusion to a specific key point in a face. An existing key point detection technology cannot distinguish the occlusion, and a corresponding facial feature key point may still be recognized in a position of the protective product. Consequently, a recognized face image does not correspond to a real situation. In addition, some existing facial beautification functions or makeup functions can perform beautification processing such as color enhancement and contour modification on a detected face key point. If an occlusion object in a face image cannot be accurately recognized, a strange effect of adding lipstick over the mask may occur, causing poor user experience. Therefore, in this step, the first face image added with the occlusion object may be constructed based on an existing face image. A key point in the first face image does not change compared with that in the existing face image. Therefore, coordinate values of the key point in the existing face image, that is, the coordinate values of the first key point in the first face image, may be determined by using any existing key point detection technology. The occlusion object may be added to any position in the face image, and then occlusion information of the first key point in the first face image is marked based on an adding position. The occlusion information may include unoccluded (set as 0) and occluded (set as 1). It is assumed that the first key point includes a left corner of a mouth, the occlusion object is a mask, and the adding position is a face area below an eye in the face image. In this way, occlusion information of the left corner of the mouth is occluded. Alternatively, when the first key point is an end of a left eyebrow, apparently, occlusion information of the end of the left eyebrow is unoccluded.

S200: Use the first face image as input data, and use the coordinate values of the first key point and the occlusion information of the first key point as output data, to train an occlusion detection model, so that the occlusion detection model outputs, based on any input second face image, coordinate values of a second key point included in the second face image and an occlusion probability of the second key point.

On a basis that the training sample data is obtained, machine learning training may be performed based on the training sample data by using any existing neural network model. For example, for a mobile terminal, a model such as MobileNet or ShuffleNet may be selected, and for a cloud terminal, a model such as ResNet or Inception may be selected. A specific model selection may be determined based on different requirements of an application scenario. This is not limited in this application.

The first face image in the training sample data is input into the occlusion detection model, so that the occlusion detection model predicts coordinate values of each key point included in the first face image and a probability of whether the key point is occluded. The probability may be any value between [0, 1], and a larger value indicates a larger probability of being occluded. The coordinate values of the first key point and the occlusion information of the first key point may be used as truth value data, to calculate loss functions corresponding to the coordinate values of each key point and the occlusion probability of the key point that are predicted by the occlusion detection model. The loss function may be selected as, for example, MSE Loss or Wing Loss. Any existing optimization algorithm, for example, a gradient descent method or an adaptive moment estimation method may be used to minimize the loss function, and to determine an occlusion parameter of the occlusion detection model, such as a weight value corresponding to each neuron.

Through the foregoing steps, a stable and ideal occlusion detection model may be obtained in this embodiment. The model can, for any input face image, automatically predict the coordinates of the key point and the occlusion probability of the key point.

FIG. 2 is a schematic flowchart of constructing training sample data according to Embodiment 1 of this application. As shown in FIG. 2, constructing the training sample data in step S100 includes:
S110: Obtain an original face image that does not include an occlusion object.

The original face image may include a plurality of pixels, and each pixel has a corresponding pixel value, for example, a color value formed by RGB. In this way, the original face image may be represented as a matrix, and each element in the matrix corresponds to one pixel.

S 120: Obtain an original occlusion object image that includes the occlusion object, and extract a target occlusion object from the original occlusion object image.

For ease of calculation, a size of the original occlusion object image is preferably the same as a size of the original face image, that is, includes a same quantity of pixels. Correspondingly, the original occlusion object image may also be represented as a matrix.

It may be understood that a large quantity of background information in addition to the target occlusion object may exist in the original occlusion object image directly photographed by a photographing apparatus. In this step, background information in the original occlusion object image may be deleted by using an existing computer vision technology, to extract a pure target occlusion object without interference.

In an example, an image segmentation technology, for example, a deep learning network such as Mask R-CNN or DeepLab or a conventional graphcut method may be used to segment the original occlusion object image to obtain a segmentation contour (Mask). The segmentation contour is used to distinguish between a foreground and a background in the original occlusion object image. Specifically, an area in which the target occlusion object is positioned is used as the foreground, and the other area is used as the background. It should be noted that the segmentation contour only performs a simple binary segmentation on a profile of the target occlusion object. For example, a pixel value in the foreground is set as 1 (that is, pure white), and a pixel value in the background is set as 0 (that is, pure black).

It may be understood that a color of a real target occlusion object may not necessarily be pure black. Therefore, in this step, convolution calculation is performed by using the segmentation contour and the original occlusion object image, to obtain the target occlusion object, that is, to obtain a real pixel value corresponding to each pixel in the target occlusion object.

S130: Synthesize the target occlusion object and the face image, to obtain the first face image added with the occlusion object.

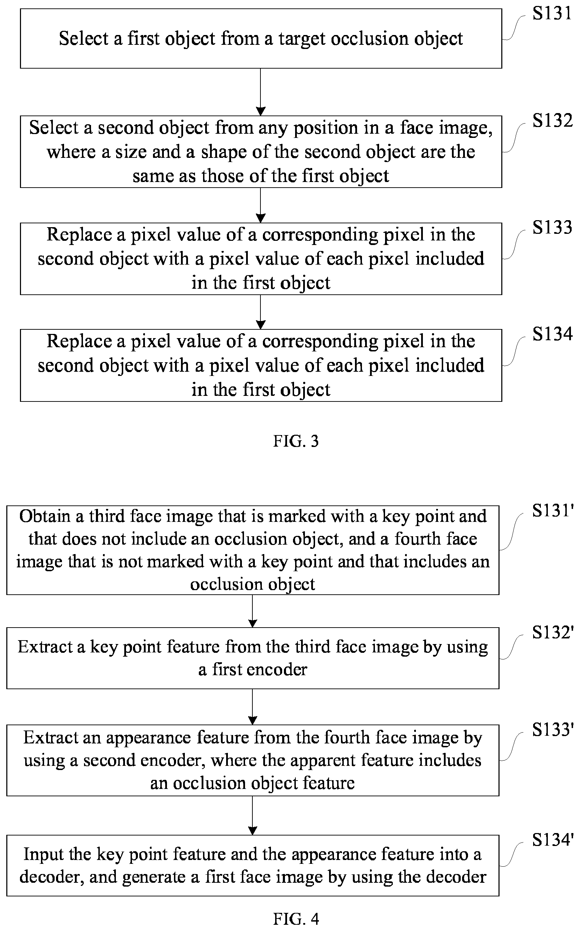

FIG. 3 is a schematic flowchart of synthesizing a first face image according to Embodiment 1 of this application. As shown in FIG. 3, step S130 includes:
S131: Select a first object from the target occlusion object. The first object may include all or a part of pixels in the target occlusion object.

To increase data diversity, affine transformation such as translation, scaling, flipping, rotating, and shearing may further be performed on the first object, to obtain first objects in different states.

S132: Select a second object from any position in the face image, where a size and a shape of the second object are the same as those of the first object. For example, if the shape of the first object is an ellipse and includes M pixels, the second object also needs to be an ellipse and include M pixels.

It should be noted that, in a case in which affine transformation is performed on the first object, the size and the shape of the second object need to be the same as a size and a shape of a transformed first object.

S133: Replace a pixel value of a corresponding pixel in the second object with a pixel value of each pixel included in the first object.

Generally, a color of the target occlusion object is different from a skin color of a face. It may be understood that the pixel value of the corresponding pixel in the second object is set as a pixel value of a pixel in the first object, so that an effect of the first object occluded on the face image is visually achieved.

It is assumed that an original face image marked with the key point is represented as A, the original occlusion object image is represented as I, the segmentation contour is represented as M, and the target occlusion object is represented as Z = I * M. It is assumed that affine transformation is performed on Z to obtain Z', and affine transformation is correspondingly performed on M to obtain M'. It may be understood that a first face image B finally obtained after affine transformation may be represented as B = A * (1 - M') + Z'.

S 140: Record the coordinate values of the first key point in the first face image and occlusion information of each first key point.

The coordinate values of the first key point are determined in advance, and the occlusion information of the first key point is determined based on an area range of the second object. For example, occlusion information of a first key point that falls within the area range of the second object is occluded (set as 1), and occlusion information of a first key point that falls beyond the area range of the second object is unoccluded (set as 0).

Through the foregoing steps, the first face image added with the occlusion object may be obtained. This helps to provide rich training sample data, so that accuracy of the occlusion detection model is improved.

FIG. 4 is another schematic flowchart of synthesizing a first face image according to Embodiment 1 of this application. As shown in FIG. 4, step S130 includes:
S 131': Obtain a third face image that is marked with a key point and that does not include an occlusion object, and a fourth face image that is not marked with a key point and that includes an occlusion object.

In this embodiment, the third face image may be, for example, a front face photo taken without a hat, and each key point is marked in advance. In this embodiment, the fourth face image includes a relatively large quantity of occlusion objects, such as a hat, a mask, and glasses. The fourth face image does not need to be marked with the key point in advance.

S132': Extract a key point feature from the third face image by using a first encoder.

The first encoder may be formed by any neural network, such as a convolutional neural network. Because the key point in the third face image has been marked in advance, the key point feature extracted by the first encoder has relatively high accuracy.

S133': Extract an appearance feature from the fourth face image by using a second encoder, where the apparent feature includes an occlusion object feature.

The apparent feature is another feature in the face image other than the key point feature, such as a physical feature, an accessory feature, and an occlusion feature.

S 134': Input the key point feature and the appearance feature into a decoder, and generate the first face image by using the decoder.

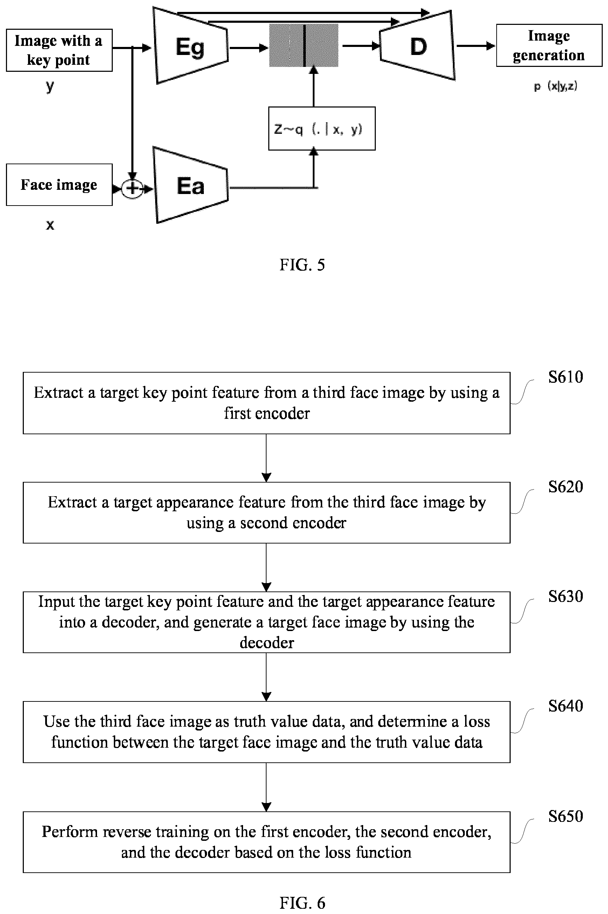

FIG. 5 is a schematic network diagram of synthesizing a first face image by using an encoder and a decoder according to Embodiment 1 of this application. As shown in FIG. 5, Eg represents the first encoder, configured to extract the key point feature. Ea represents the second encoder, configured to extract the appearance feature. D represents the decoder, configured to synthesize the key point feature extracted by Eg and the appearance feature extracted by Ea, to finally generate the first face image.

In this embodiment, the extracted key point feature and the appearance feature are restored to the first face image by using the decoder. It may be understood that the key point feature in the first face image comes from the third face image, and the appearance feature in the first face image comes from the fourth face image. The appearance feature in the first face image includes a relatively large quantity of occlusion features. In this way, the first face image added with the occlusion object is constructed.

It should be noted that, when the first face image is synthesized by using the decoder and the encoder, position coordinates of the face key point are known, but coordinates of the occlusion object are unknown. In this case, a face part or a facial feature part in a picture needs to be further recognized by using an existing facial feature segmentation algorithm. In this case, an unrecognized part in the face image is a position of the occlusion object. On a basis that the position of the occlusion object is determined, it may be further determined which face key point is occluded and which is not occluded.

FIG. 6 is a schematic flowchart of training a first encoder, a second encoder, and a decoder according to Embodiment 1 of this application. As described in FIG. 6, in this embodiment, a neural network including the first encoder, the second encoder, and the decoder is obtained by training through the following steps:
S610: Extract a target key point feature from the third face image by using the first encoder. This step is used to train a capability of the first encoder to extract the key point feature.

S620: Extract a target appearance feature from the third face image by using the second encoder. This step is used to train a capability of the second encoder to extract the appearance feature.

S630: Input the target key point feature and the target appearance feature into the decoder, and generate a target face image by using the decoder. This step is used to train a capability of the decoder to synthesize an image based on the key point feature and the appearance feature.

S640: Use the third face image as truth value data, and determine a loss function between the target face image and the truth value data.

Specifically, in this embodiment, a loss function L may be represented by using the following formula: $L = - KL \left(q\left(z\left|x\right.\right), p\left(z\left|y\right.\right)\right) + {\left‖x-G\left(Ea+Eg\right)\right‖}_{2}^{2}$

In the foregoing formula, x represents the third face image, y represents the key point feature in the third face image, z represents the appearance feature in the third face image, G (Ea + Eg) represents the target face image generated by the decoder, q represents a distribution probability of prediction data, p represents a distribution probability of truth value data, and KL represents a divergence function.

S650: Perform reverse training on the first encoder, the second encoder, and the decoder based on the loss function.

By using the foregoing process, accuracy of the first encoder and the second encoder extracting a feature and accuracy of the decoder restoring an image are improved, so that a large quantity of first face images added with occlusion objects and determined key points are synthesized.

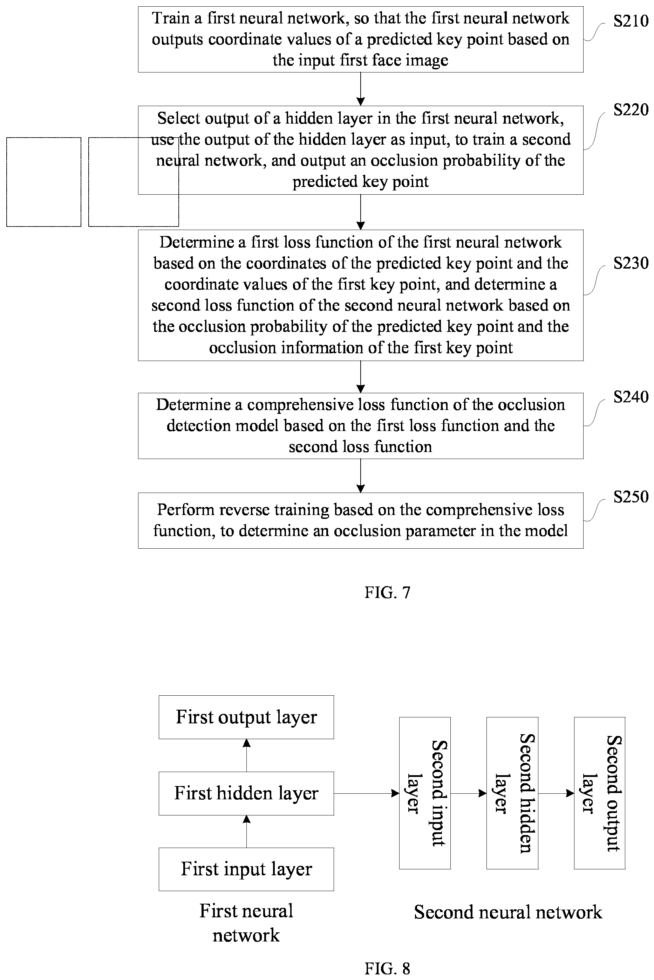

FIG. 7 is a schematic flowchart of training an occlusion detection model according to Embodiment 1 of this application. As shown in FIG. 7, step S200 includes:
S210: Train a first neural network, so that the first neural network outputs coordinate values of a predicted key point based on the input first face image.

In this embodiment, the first neural network may be any existing neural network model. For example, for a mobile terminal, a model such as MobileNet or ShuffleNet may be selected, and for a cloud terminal, a model such as ResNet or Inception may be selected. This is not limited in this application. Based on the foregoing description in which the first face image and the coordinate values of the first key point are obtained, the first face image is used as the input data, and the coordinate values of the first key point is used as truth value data, to train the first neural network, so that the first neural network outputs the coordinate values of the predicted key point that is relatively close to the coordinate values of the first key point.

S220: Select output of a hidden layer in the first neural network, use the output of the hidden layer as input, to train a second neural network, and output an occlusion probability of the predicted key point.

It may be understood that any neural network includes an input layer, an output layer, and a hidden layer, and a specific quantity of the hidden layer may be set to be one or more based on an actual requirement. In this step, output data of one hidden layer is selected, the output data of the hidden layer is used as an input layer of the second neural network, and the occlusion information of the first key point obtained in the foregoing description is used as the truth data, to train the second neural network, so that the second neural network outputs the occlusion probability of the predicted key point that is relatively close to the occlusion information of the first key point. The occlusion probability may be any value between [0, 1], and a larger value indicates a larger probability of a corresponding predicted key point being occluded.

Similarly, the second neural network may be any existing neural network model. For example, for a mobile terminal, a model such as MobileNet or ShuffleNet may be selected, and for a cloud terminal, a model such as ResNet or Inception may be selected. This is not limited in this application.

FIG. 8 is a schematic diagram of a structure of a first neural network and a second neural network according to Embodiment 1 of this application.

As shown in FIG. 8, the first neural network includes a first input layer, a first hidden layer, and a first output layer, and the second neural network includes a second input layer, a second hidden layer, and a second output layer. In a training phase, the first input layer is used to receive the input first face image, and the first output layer is used to output the coordinate values of the predicted key point included in the first face image. The first hidden layer may specifically include one or more layers, and output of one of the hidden layers is used as input to the second hidden layer, to output the occlusion probability of the predicted key point by using the second hidden layer.

Through the foregoing structure, in this embodiment, two neural networks are used to construct the occlusion detection model that can obtain two different sets of output results based on one set of input data, so that the coordinates of the key point in the face image and the occlusion probability of the key point can be predicted simultaneously.

S230: Determine a first loss function of the first neural network based on the coordinates of the predicted key point and the coordinate values of the first key point, and determine a second loss function of the second neural network based on the occlusion probability of the predicted key point and the occlusion information of the first key point.

The loss function represents a difference between predicted data and truth value data. In this embodiment, the occlusion detection model is constructed by using the first neural network and the second neural network, and the first loss function and the second loss function are correspondingly generated.

S240: Determine a comprehensive loss function of the occlusion detection model based on the first loss function and the second loss function.

It may be understood that, in this embodiment, the comprehensive loss function of the occlusion detection model is constructed by using both the first loss function and the second loss function. For example, a comprehensive loss function loss is determined by the following formula: $loss = λ 1 ∗ {\sum }_{i}^{n} \sqrt{{p}_{i}} ∗ {l}_{i} + λ 2 ∗ {o}_{i}$

pᵢ represents an occlusion probability of an i^{th} predicted key point, lᵢ represents the first loss function of the first neural network, oᵢ represents the second loss function of the second neural network, and λ₁ and λ₂ respectively represent empirical parameters. Determining an appropriate comprehensive loss function helps to improve prediction accuracy of the occlusion detection model.

S250: Perform reverse training based on the comprehensive loss function, to determine an occlusion parameter in the model.

In this embodiment, reverse training may be performed on the occlusion detection model by using an optimization algorithm such as a backpropagation algorithm or a gradient descent algorithm, to adjust the occlusion parameter in the occlusion detection model, so that the model's comprehensive loss function of training data sets reaches a relatively small value. The occlusion parameter may be a weight value corresponding to each neuron in the occlusion detection model.

Through the foregoing steps, a relatively ideal occlusion detection model may be obtained in this embodiment. The model can accurately output the coordinate values of the predicted key point and the occlusion probability of the predicted key point based on any input face image.

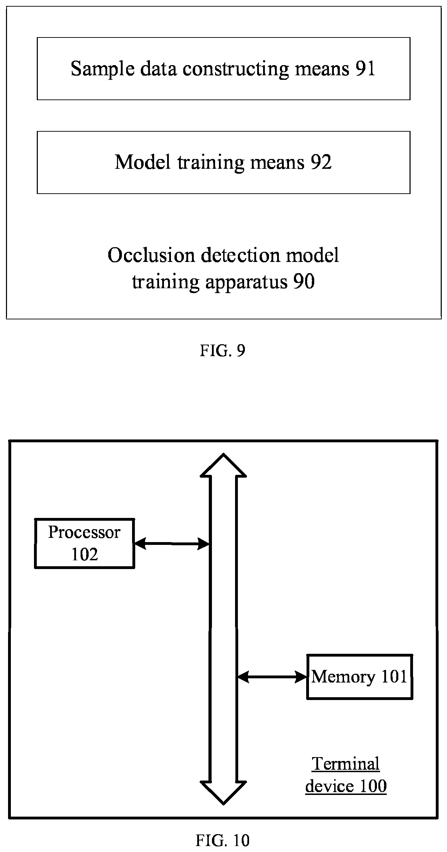

FIG. 9 shows an occlusion detection model training apparatus. In this embodiment, a training apparatus 90 may include or be divided into one or more program means, and the one or more program means are stored in a storage medium and are executed by one or more processors, to complete this application and implement the foregoing occlusion detection model training method. The program means in this application is an instruction segment of a series of computer-readable instructions that can complete a specific function, and is more suitable than a program for describing an execution process that is of the occlusion detection model training apparatus 90 and that is in the storage medium. The following description specifically describes functions of the program means in this embodiment:
a sample data constructing means 91, applicable to constructing training sample data, where the training sample data includes a first face image added with an occlusion object, coordinate values of a first key point in the first face image, and occlusion information of the first key point; and
a model training means 92, applicable to using the first face image as input data, and using the coordinate values of the first key point and the occlusion information of the first key point as output data, to train an occlusion detection model, so that the occlusion detection model outputs, based on any input second face image, coordinate values of a second key point included in the second face image and an occlusion probability of the second key point.

This embodiment further provides a computer device, for example, a smartphone, a tablet computer, a notebook computer, a desktop computer, a rack server, a blade server, a tower server, or a cabinet server (including an independent server, or a server cluster formed by a plurality of servers) that can execute a program. As shown in FIG. 10, a computer device 100 in this embodiment at least includes but is not limited to: a memory 101 and a processor 102 that can be communicatively connected to each other by using a system bus. It should be noted that FIG. 10 shows only the computer device 100 with the components 101 and 102. However, it should be understood that implementation of all the shown components is not required, and more or fewer components may be alternatively implemented.

In this embodiment, the memory 101 (that is, a readable storage medium) includes a flash memory, a hard disk, a multimedia card, a card-type memory (for example, an SD memory or a DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disc, and the like. In some embodiments, the memory 101 may be an internal storage unit of the computer device 100, such as a hard disk or a memory of the computer device 100. In some other embodiments, the memory 101 may be an external storage device of the computer device 100, for example, a removable hard disk, a smart media card (Smart Media Card, SMC), a secure digital (Secure Digital, SD) card, or a flash card (Flash Card) that is disposed on the computer device 100. Certainly, the memory 101 may alternatively include both the internal storage unit of the computer device 100 and the external storage device of the computer device 100. In this embodiment, the memory 101 is generally configured to store an operating system and various application software that are installed on the computer device 100, for example, program code of the occlusion detection model training apparatus 90 according to Embodiment 1. In addition, the memory 101 may be further configured to temporarily store various types of data that has been output or is to be output.

In some embodiments, the processor 102 may be a central processing unit (Central Processing Unit, CPU), a controller, a microcontroller, a microprocessor, or another data processing chip. The processor 102 is generally configured to control an overall operation of the computer device 100. In this embodiment, the processor 102 is configured to run program code stored in the memory 101 or process data, for example, run the occlusion detection model training apparatus 90, to implement the occlusion detection model training method according to Embodiment 1.

This embodiment further provides a computer-readable storage medium. The computer-readable storage medium may be a volatile storage medium, or may be a non-volatile storage medium, such as a flash memory, a hard disk, a multimedia card, a card-type memory (for example, an SD memory or a DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disc, a server, and an App application store. The computer-readable storage medium stores computer-readable instructions, and a corresponding function is implemented when a program is executed by the processor. The computer-readable storage medium in this embodiment is configured to store the occlusion detection model training apparatus 90. When the occlusion detection model training apparatus 90 is executed by the processor, the occlusion detection model training method according to Embodiment 1 is implemented.

### Embodiment 2

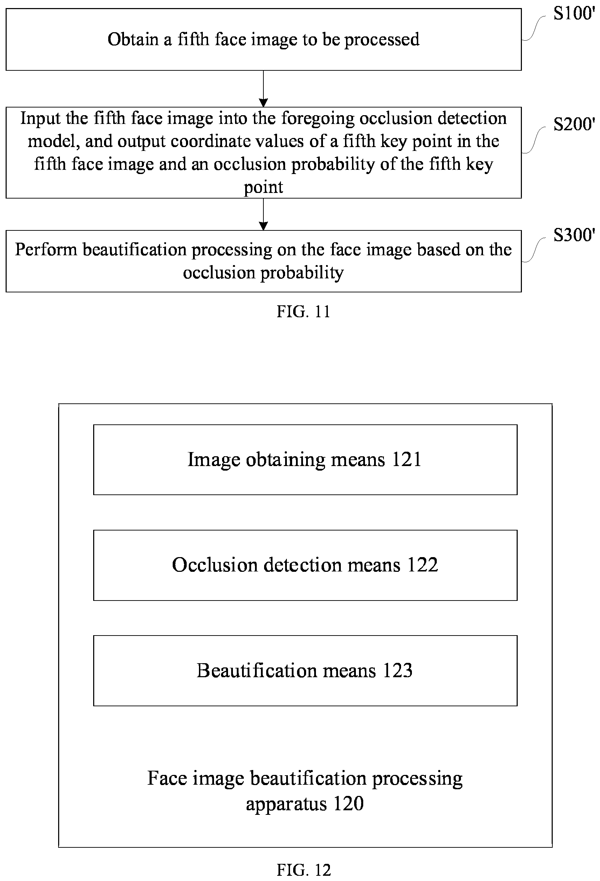

Referring to FIG. 11, this embodiment provides a face image beautification processing method, including the following steps:
S100': Obtain a fifth face image to be processed, such as a photo photographed by a user.
S200': Input the fifth face image into the foregoing occlusion detection model, and output coordinate values of a fifth key point in the fifth face image and an occlusion probability of the fifth key point. For example, coordinate positions of a plurality of key points, such as an eye, a nose, a lip, and a jaw in the photo photographed by the user are output, and probabilities that occlusion objects exist at the coordinate positions of the key points are output, for example, whether the eye is occluded, and whether the mouth is occluded.
S300': Perform beautification processing on the face image based on the occlusion probability. For example, beautification processing is applied only to a key point position in which it is determined that no occlusion exists, and is skipped to be performed on a key point position in which it is determined that occlusion exists. For example, when it is detected that the lip of the user is occluded by a mask, color enhancement is not performed on a lip position. When it is detected that an eye position of the user is occluded by sunglasses, contour drawing or the like is not performed on the eye position.

Through the foregoing method, beautification processing of the face image can be more consistent with a real scenario, so that user experience is improved.

FIG. 12 shows a face image beautification processing apparatus 120, including:
an image obtaining means 121, applicable to obtaining a third face image to be processed;
an occlusion detection means 122, applicable to inputting the third face image into the foregoing occlusion detection model, and outputting coordinate values of a third key point in the third face image and an occlusion probability of the third key point; and
a beautification means 123, applicable to performing beautification processing on the face image based on the occlusion probability.

The sequence numbers of the foregoing embodiments of this application are merely for illustrative purposes, and are not intended to indicate priorities of the embodiments.

Descriptions about any process or method described in a flowchart or in another manner herein may be understood as indicating that one or more means, segments, or parts of code of an executable instruction that is used to implement a specific logical function or a step of a process are included, the scope of preferred implementations of this application includes other implementation, and functions may be performed in a sequence other than a shown or discussed sequence, including in a basically simultaneous manner or a reverse sequence according to the functions concerned. This should be understood by a person skilled in the technological field to which the embodiments of this application belong.

A person of ordinary skill in the art may understand that all or some of the steps of the method embodiments may be implemented by a program instructing relevant hardware. The program may be stored in a computer readable medium. When the program runs, one or a combination of the steps of the method embodiments is performed.

In descriptions in this specification, descriptions about such reference terms as "an embodiment", "some embodiments", "an example", "a specific example", and "some examples" mean that specific features, structures, materials, or characteristics described with reference to the embodiments or examples are included in at least one embodiment or example of this application. In this specification, the foregoing example expressions of the terms are not necessarily with respect to a same embodiment or example. In addition, the described specific features, structures, materials, or characteristics may be combined in a proper manner in any one or more of the embodiments or examples.

Based on the foregoing descriptions of the implementations, a person skilled in the art may clearly understand that the method of the foregoing embodiment may be implemented by software in addition to a necessary universal hardware platform or by hardware only. In most circumstances, the former is a preferred implementation.

The foregoing descriptions are merely preferred embodiments of this application, and are not intended to limit the scope of this application. Any equivalent structure or equivalent process change made by using the content of the specification and the accompanying drawings of this application, or when directly or indirectly applied to other related technical fields, shall fall within the protection scope of this application.

## Claims

1. A computer-implemented occlusion detection model training method, comprising the following steps:
constructing (S100) a plurality of pieces of training sample data, wherein the training sample data comprises a first face image added with an occlusion object, coordinate values of a first key point in the first face image, and occlusion information of the first key point, wherein the constructing a plurality of pieces of training sample data comprises:
obtaining (S110) an original face image that does not comprise the occlusion object;
obtaining (S120) an original occlusion object image that comprises the occlusion object, and extracting a target occlusion object from the original occlusion object image;
synthesizing (S130) the target occlusion object and the original face image, to obtain the first face image added with the occlusion object, comprising:
obtaining (S131') the original face image that has a marked key point and that does not comprise the occlusion object, and the original occlusion object image that has a key point without marks and that comprises the occlusion object;
extracting (S132') a key point feature from the original face image by using a first encoder;
extracting (S133') an appearance feature from the original occlusion object image by using a second encoder, wherein the apparent feature comprises an occlusion object feature; and
synthesizing the key point feature and the appearance feature with a decoder to generate the first face image; and
recording (S140) the coordinate values of the first key point in the first face image and occlusion information of each first key point;
wherein the first encoder, the second encoder, and the decoder are obtained by training through the following steps:
extracting (S610) a target key point feature from the original face image by using the first encoder;
extracting (S620) a target appearance feature from the original occlusion object image by using the second encoder;
synthesizing the target key point feature and the target appearance feature with the decoder to generate a target face image; and
performing reverse training on the first encoder, the second encoder, and the decoder based on a function determined based on the original face image and the target face image; and
using (S200) the first face image as input data, and using the coordinate values of the first key point and the occlusion information of the first key point as output data, to train an occlusion detection model, so that the occlusion detection model outputs, based on any input second face image, coordinate values of a second key point comprised in the second face image and an occlusion probability of the second key point.

2. The training method according to claim 1, wherein the step of obtaining an original occlusion object image that comprises the occlusion object, and extracting a target occlusion object from the original occlusion object image comprises:
obtaining a segmentation contour of the target occlusion object based on an image segmentation technology; and
performing convolution calculation by using the segmentation contour and the original occlusion object image, to obtain the target occlusion object.

3. The training method according to claim 1 or 2, wherein the step of using the first face image as input data, and using the coordinate values of the first key point and the occlusion information of the first key point as output data, to train an occlusion detection model comprise:
training (S210) a first neural network, so that the first neural network outputs coordinate values of a predicted key point based on the input first face image;
selecting (S220) output of a hidden layer in the first neural network, using the output of the hidden layer as input, to train a second neural network, and outputting an occlusion probability of the predicted key point;
determining (S230) a first loss function of the first neural network based on the coordinates of the predicted key point and the coordinate values of the first key point, and determining a second loss function of the second neural network based on the occlusion probability of the predicted key point and the occlusion information of the first key point;
determining (S240) a comprehensive loss function of the occlusion detection model based on the first loss function and the second loss function; and
performing (S250) reverse training based on the comprehensive loss function, to determine an occlusion parameter in the model.

4. The training method according to claim 3, wherein an expression of the comprehensive loss function is: $loss = λ 1 ∗ {\sum }_{i}^{n} \sqrt{{p}_{i}} ∗ {l}_{i} + λ 2 ∗ {o}_{i}$ pᵢ represents an occlusion probability of an i^{th} predicted key point, lᵢ represents the first loss function of the first neural network, oᵢ represents the second loss function of the second neural network, and λ₁ and λ₂ respectively represent empirical parameters.

5. A computer-implemented face image processing method, comprising:
training an occlusion detection model according to the training method of any of claims 1 to 4;
obtaining (S 100') a fifth face image to be processed;
inputting (S200') the fifth face image into the trained occlusion detection model, and outputting coordinate values of a fifth key point in the fifth face image and an occlusion probability of the fifth key point; and
performing (S300') beautification processing on the fifth face image based on the occlusion probability.

6. An occlusion detection model training apparatus (90), comprising:
a sample data constructing means (91), applicable to constructing a plurality of pieces of training sample data, wherein the training sample data comprises a first face image added with an occlusion object, coordinate values of a first key point in the first face image, and occlusion information of the first key point, wherein the constructing a plurality of pieces of training sample data comprises:
obtaining (S110) an original face image that does not comprise the occlusion object;
obtaining (S120) an original occlusion object image that comprises the occlusion object, and extracting a target occlusion object from the original occlusion object image;
synthesizing (S130) the target occlusion object and the face image, to obtain the first face image added with the occlusion object, comprising:
obtaining (S131') the original face image that has a marked key point and that does not comprise the occlusion object, and the original occlusion object image that has a key point without marks and that comprises the occlusion object;
extracting (S132') a key point feature from the original face image by using a first encoder;
extracting (S133') an appearance feature from the original occlusion object image by using a second encoder, wherein the apparent feature comprises an occlusion object feature; and
synthesizing the key point feature and the appearance feature with a decoder to generate the first face image by using the decoder; and
recording (S140) the coordinate values of the first key point in the first face image and occlusion information of each first key point;
wherein the first encoder, the second encoder, and the decoder are obtained by training through the following steps:
extracting (S610) a target key point feature from the original face image by using the first encoder;
extracting (S620) a target appearance feature from the original occlusion object image by using the second encoder;
synthesizing the target key point feature and the target appearance feature with the decoder to generate a target face image; and
performing reverse training on the first encoder, the second encoder, and the decoder based on a function determined based on the original face image and the target face image; and
a model training means (92), applicable to using the first face image as input data, and using the coordinate values of the first key point and the occlusion information of the first key point as output data, to train an occlusion detection model, so that the occlusion detection model outputs, based on any input second face image, coordinate values of a second key point comprised in the second face image and an occlusion probability of the second key point.

7. The occlusion detection model training apparatus according to claim 6, wherein the means comprises:
at least one processor; and
at least one memory comprising computer program code, the at least one memory and computer program code configured to, with the at least one processor, cause the performance of the apparatus.

8. A face image processing apparatus (120), comprising:
a means applicable to train an occlusion detection model according to the training method of any of claims 1 to 4;
an image obtaining means (121), applicable to obtaining a fifth face image to be processed;
an occlusion detection means (122), applicable to inputting the fifth face image into the trained occlusion detection model, and outputting coordinate values of a fifth key point in the fifth face image and an occlusion probability of the fifth key point; and
a beautification means (123), applicable to performing beautification processing on the fifth face image based on the occlusion probability.

9. The face image processing apparatus according to claim 8, wherein the means comprises:
at least one processor; and
at least one memory comprising computer program code, the at least one memory and computer program code configured to, with the at least one processor, cause the performance of the apparatus.

10. A computer-readable storage medium, wherein the computer-readable storage medium stores computer-readable instructions, and the computer-readable instructions are executed by a processor to implement steps of the method according to any one of claims 1 to 4.

## Patentansprüche

1. Computerimplementiertes Trainingsverfahren für ein Verdeckungsdetektionsmodell, umfassend die folgenden Schritte:
Konstruieren (S100) einer Vielzahl von Trainingsbeispieldaten, wobei die Trainingsbeispieldaten ein erstes Gesichtsbild, dem ein Verdeckungsobjekt hinzugefügt wurde, Koordinatenwerte eines ersten Schlüsselpunkts in dem ersten Gesichtsbild und eine Verdeckungsinformation zum ersten Schlüsselpunkt umfassen, wobei das Konstruieren einer Vielzahl von Trainingsbeispieldaten umfasst:
Erhalten (S110) eines ursprünglichen Gesichtsbildes, das das Verdeckungsobjekt nicht umfasst;
Erhalten (S120) eines ursprünglichen Verdeckungsobjektbildes, das das Verdeckungsobjekt umfasst, und Extrahieren eines Ziel-Verdeckungsobjekts aus dem ursprünglichen Verdeckungsobjektbild;
Synthetisieren (S130) des Ziel-Verdeckungsobjekts und des ursprünglichen Gesichtsbildes, um das erste Gesichtsbild zu erhalten, dem das Verdeckungsobjekt hinzugefügt wurde, umfassend:
Erhalten (S131') des ursprünglichen Gesichtsbildes, das einen markierten Schlüsselpunkt aufweist und das Verdeckungsobjekt nicht umfasst, und des ursprünglichen Verdeckungsobjektbildes, das einen Schlüsselpunkt ohne Markierungen aufweist und das Verdeckungsobjekt umfasst;
Extrahieren (S132') eines Schlüsselpunktmerkmals aus dem ursprünglichen Gesichtsbild unter Verwendung eines ersten Encoders;
Extrahieren (S133') eines Erscheinungsmerkmals aus dem ursprünglichen Verdeckungsobjektbild unter Verwendung eines zweiten Encoders, wobei das Erscheinungsmerkmal ein Verdeckungsobjektmerkmal umfasst; und
Synthetisieren des Schlüsselpunktmerkmals und des Erscheinungsmerkmals mit einem Decoder, um das erste Gesichtsbild zu erzeugen; und
Aufzeichnen (S140) der Koordinatenwerte des ersten Schlüsselpunkts in dem ersten Gesichtsbild und der Verdeckungsinformation zu jedem ersten Schlüsselpunkt;
wobei der erste Encoder, der zweite Encoder und der Decoder durch Training mittels der folgenden Schritte erhalten werden:
Extrahieren (S610) eines Ziel-Schlüsselpunktmerkmals aus dem ursprünglichen Gesichtsbild unter Verwendung des ersten Encoders;
Extrahieren (S620) eines Ziel-Erscheinungsmerkmals aus dem ursprünglichen Verdeckungsobjektbild unter Verwendung des zweiten Encoders;
Synthetisieren des Ziel-Schlüsselpunktmerkmals und des Ziel-Erscheinungsmerkmals mit dem Decoder, um ein Ziel-Gesichtsbild zu erzeugen; und
Durchführen eines Rückwärtstrainings an dem ersten Encoder, dem zweiten Encoder und dem Decoder auf Grundlage einer Funktion, die auf Grundlage des ursprünglichen Gesichtsbildes und des Ziel-Gesichtsbildes bestimmt wird; und
Verwenden (S200) des ersten Gesichtsbildes als Eingabedaten und Verwenden der Koordinatenwerte des ersten Schlüsselpunkts und der Verdeckungsinformation zum ersten Schlüsselpunkt als Ausgabedaten, um ein Verdeckungsdetektionsmodell zu trainieren, sodass das Verdeckungsdetektionsmodell auf Grundlage eines beliebigen eingegebenen zweiten Gesichtsbildes Koordinatenwerte eines in dem zweiten Gesichtsbild enthaltenen zweiten Schlüsselpunkts und eine Verdeckungswahrscheinlichkeit des zweiten Schlüsselpunkts ausgibt.

2. Trainingsverfahren nach Anspruch 1, wobei der Schritt des Erhaltens eines ursprünglichen Verdeckungsobjektbildes, welches das Verdeckungsobjekt umfasst, und des Extrahierens eines Ziel-Verdeckungsobjekts aus dem ursprünglichen Verdeckungsobjektbild umfasst:
Erhalten einer Segmentierungskontur des Ziel-Verdeckungsobjekts auf Grundlage einer Bildsegmentierungstechnologie; und
Durchführen einer Faltungsberechnung unter Verwendung der Segmentierungskontur und des ursprünglichen Verdeckungsobjektbildes, um das Ziel-Verdeckungsobjekt zu erhalten.

3. Trainingsverfahren nach Anspruch 1 oder 2, wobei der Schritt des Verwendens des ersten Gesichtsbildes als Eingabedaten und des Verwendens der Koordinatenwerte des ersten Schlüsselpunkts und der Verdeckungsinformation zum ersten Schlüsselpunkt als Ausgabedaten, um ein Verdeckungsdetektionsmodell zu trainieren, umfasst:
Trainieren (S210) eines ersten neuronalen Netzes, sodass das erste neuronale Netz auf Grundlage des eingegebenen ersten Gesichtsbildes Koordinatenwerte eines vorhergesagten Schlüsselpunkts ausgibt;
Auswählen (S220) einer Ausgabe einer verborgenen Schicht in dem ersten neuronalen Netz, Verwenden der Ausgabe der verborgenen Schicht als Eingabe, um ein zweites neuronales Netz zu trainieren, und Ausgeben einer Verdeckungswahrscheinlichkeit des vorhergesagten Schlüsselpunkts;
Bestimmen (S230) einer ersten Verlustfunktion des ersten neuronalen Netzes auf Grundlage der Koordinaten des vorhergesagten Schlüsselpunkts und der Koordinatenwerte des ersten Schlüsselpunkts und Bestimmen einer zweiten Verlustfunktion des zweiten neuronalen Netzes auf Grundlage der Verdeckungswahrscheinlichkeit des vorhergesagten Schlüsselpunkts und der Verdeckungsinformation zum ersten Schlüsselpunkt;
Bestimmen (S240) einer Gesamtverlustfunktion des Verdeckungsdetektionsmodells auf Grundlage der ersten Verlustfunktion und der zweiten Verlustfunktion; und
Durchführen (S250) eines Rückwärtstrainings auf Grundlage der Gesamtverlustfunktion, um einen Verdeckungsparameter in dem Modell zu bestimmen.

4. Trainingsverfahren nach Anspruch 3, wobei ein Ausdruck der Gesamtverlustfunktion lautet: $loss = λ 1 ∗ {\sum }_{i}^{n} \sqrt{{p}_{i}} ∗ {l}_{i} + λ 2 ∗ {o}_{i}$ wobei *pᵢ* eine Verdeckungswahrscheinlichkeit eines i-ten vorhergesagten Schlüsselpunkts repräsentiert, *lᵢ* die erste Verlustfunktion des ersten neuronalen Netzes repräsentiert, *oᵢ* die zweite Verlustfunktion des zweiten neuronalen Netzes repräsentiert und *λ*1 und *λ*2 jeweils empirische Parameter repräsentieren.

5. Computerimplementiertes Gesichtsbildverarbeitungsverfahren, umfassend:
Trainieren eines Verdeckungsdetektionsmodells gemäß dem Trainingsverfahren nach einem der Ansprüche 1 bis 4;
Erhalten (S100') eines zu verarbeitenden fünften Gesichtsbildes;
Eingeben (S200') des fünften Gesichtsbildes in das trainierte Verdeckungsdetektionsmodell und Ausgeben von Koordinatenwerten eines fünften Schlüsselpunkts in dem fünften Gesichtsbild und einer Verdeckungswahrscheinlichkeit des fünften Schlüsselpunkts; und
Durchführen (S300') einer Verschönerungsverarbeitung an dem fünften Gesichtsbild auf Grundlage der Verdeckungswahrscheinlichkeit.

6. Trainingsvorrichtung (90) für ein Verdeckungsdetektionsmodell, umfassend:
ein Trainingsbeispieldaten-Konstruktionsmittel (91), das zum Konstruieren einer Vielzahl von Trainingsbeispieldaten geeignet ist, wobei die Trainingsbeispieldaten ein erstes Gesichtsbild, dem ein Verdeckungsobjekt hinzugefügt wurde, Koordinatenwerte eines ersten Schlüsselpunkts in dem ersten Gesichtsbild und eine Verdeckungsinformation zum ersten Schlüsselpunkt umfassen, wobei das Konstruieren einer Vielzahl von Trainingsbeispieldaten umfasst:
Erhalten (S110) eines ursprünglichen Gesichtsbildes, das das Verdeckungsobjekt nicht umfasst;
Erhalten (S120) eines ursprünglichen Verdeckungsobjektbildes, welches das Verdeckungsobjekt umfasst, und Extrahieren eines Ziel-Verdeckungsobjekts aus dem ursprünglichen Verdeckungsobjektbild;
Synthetisieren (S130) des Ziel-Verdeckungsobjekts und des Gesichtsbildes, um das erste Gesichtsbild zu erhalten, dem das Verdeckungsobjekt hinzugefügt wurde, umfassend:
Erhalten (S131') des ursprünglichen Gesichtsbildes, das einen markierten Schlüsselpunkt aufweist und das Verdeckungsobjekt nicht umfasst, und des ursprünglichen Verdeckungsobjektbildes, das einen Schlüsselpunkt ohne Markierungen aufweist und das Verdeckungsobjekt umfasst;
Extrahieren (S132') eines Schlüsselpunktmerkmals aus dem ursprünglichen Gesichtsbild unter Verwendung eines ersten Encoders;
Extrahieren (S133') eines Erscheinungsmerkmals aus dem ursprünglichen Verdeckungsobjektbild unter Verwendung eines zweiten Encoders, wobei das Erscheinungsmerkmal ein Verdeckungsobjektmerkmal umfasst; und
Synthetisieren des Schlüsselpunktmerkmals und des Erscheinungsmerkmals mit einem Decoder, um unter Verwendung des Decoders das erste Gesichtsbild zu erzeugen; und
Aufzeichnen (S140) der Koordinatenwerte des ersten Schlüsselpunkts in dem ersten Gesichtsbild und der Verdeckungsinformation zu jedem ersten Schlüsselpunkt;
wobei der erste Encoder, der zweite Encoder und der Decoder durch Training mittels der folgenden Schritte erhalten werden:
Extrahieren (S610) eines Ziel-Schlüsselpunktmerkmals aus dem ursprünglichen Gesichtsbild unter Verwendung des ersten Encoders;
Extrahieren (S620) eines Ziel-Erscheinungsmerkmals aus dem ursprünglichen Verdeckungsobjektbild unter Verwendung des zweiten Encoders;
Synthetisieren des Ziel-Schlüsselpunktmerkmals und des Ziel-Erscheinungsmerkmals mit dem Decoder, um ein Ziel-Gesichtsbild zu erzeugen; und
Durchführen eines Rückwärtstrainings an dem ersten Encoder, dem zweiten Encoder und dem Decoder auf Grundlage einer Funktion, die auf Grundlage des ursprünglichen Gesichtsbildes und des Ziel-Gesichtsbildes bestimmt wird; und
ein Modelltrainingsmittel (92), das dazu geeignet ist, das erste Gesichtsbild als Eingabedaten zu verwenden und die Koordinatenwerte des ersten Schlüsselpunkts und die Verdeckungsinformation zum ersten Schlüsselpunkt als Ausgabedaten zu verwenden, um ein Verdeckungsdetektionsmodell zu trainieren, sodass das Verdeckungsdetektionsmodell auf Grundlage eines beliebigen eingegebenen zweiten Gesichtsbildes Koordinatenwerte eines in dem zweiten Gesichtsbild enthaltenen zweiten Schlüsselpunkts und eine Verdeckungswahrscheinlichkeit des zweiten Schlüsselpunkts ausgibt.

7. Trainingsvorrichtung für ein Verdeckungsdetektionsmodell nach Anspruch 6, wobei das Mittel umfasst:
mindestens einen Prozessor; und
mindestens einen Speicher, der Computerprogrammcode umfasst, wobei der mindestens eine Speicher und der Computerprogrammcode dazu konfiguriert sind, mit dem mindestens einen Prozessor die Ausführung der Vorrichtung zu bewirken.

8. Gesichtsbildverarbeitungsvorrichtung (120), umfassend:
ein Mittel, das dazu geeignet ist, ein Verdeckungsdetektionsmodell gemäß dem Trainingsverfahren nach einem der Ansprüche 1 bis 4 zu trainieren;
ein Bilderhaltungsmittel (121), das dazu geeignet ist, ein zu verarbeitendes fünftes Gesichtsbild zu erhalten;
ein Verdeckungsdetektionsmittel (122), das dazu geeignet ist, das fünfte Gesichtsbild in das trainierte Verdeckungsdetektionsmodell einzugeben und Koordinatenwerte eines fünften Schlüsselpunkts in dem fünften Gesichtsbild und eine Verdeckungswahrscheinlichkeit des fünften Schlüsselpunkts auszugeben; und
ein Verschönerungsmittel (123), das dazu geeignet ist, auf Grundlage der Verdeckungswahrscheinlichkeit eine Verschönerungsverarbeitung an dem fünften Gesichtsbild durchzuführen.

9. Gesichtsbildverarbeitungsvorrichtung nach Anspruch 8, wobei das Mittel umfasst:
mindestens einen Prozessor; und
mindestens einen Speicher, der Computerprogrammcode umfasst, wobei der mindestens eine Speicher und der Computerprogrammcode dazu konfiguriert sind, mit dem mindestens einen Prozessor die Ausführung der Vorrichtung zu bewirken.

10. Computerlesbares Speichermedium, wobei das computerlesbare Speichermedium computerlesbare Anweisungen speichert und die computerlesbaren Anweisungen durch einen Prozessor ausgeführt werden, um Schritte des Verfahrens nach einem der Ansprüche 1 bis 4 zu implementieren.

## Revendications

1. Procédé d'entraînement, mis en œuvre par ordinateur, d'un modèle de détection d'occlusion, comprenant les étapes suivantes:
construire (S100) une pluralité d'éléments de données d'apprentissage, dans lequel les données d'apprentissage comprennent une première image faciale à laquelle est ajouté un objet d'occlusion, des valeurs de coordonnées d'un premier point clé dans la première image faciale, ainsi que des informations d'occlusion relatives au premier point clé, dans lequel la construction d'une pluralité d'éléments de données d'apprentissage comprend:
obtenir (S110) une image faciale originale ne comprenant pas l'objet d'occlusion
obtenir (120) une image originale d'un objet d'occlusion comprenant l'objet d'occlusion, et extraire un objet d'occlusion cible à partir de l'image originale d'objet d'occlusion;
synthétiser (S130) l'objet d'occlusion cible et l'image faciale originale, afin d'obtenir la première image faciale à laquelle l'objet d'occlusion est ajouté, comprenant:
obtenir (S131') l'image faciale originale comportant un point clé marqué et ne comprenant pas l'objet d'occlusion, et l'image originale de l'objet d'occlusion comprenant un point clé dépourvu de marque et comprenant l'objet d'occlusion;
extraire (S132') une caractéristique de point clé à partir de l'image faciale originale au moyen d'un premier encodeur;
extraire (S133') une caractéristique d'apparence à partir de l'image originale de l'objet d'occlusion au moyen d'un second encodeur, la caractéristique apparente comprenant une caractéristique de l'objet d'occlusion; et
synthétiser la caractéristique de point clé et la caractéristique d'apparence au moyen d'un décodeur afin de générer la première image faciale; et
enregistrer (S140) les valeurs de coordonnées du premier point clé dans la première image faciale ainsi que les informations d'occlusion de chaque premier point clé;
dans lequel le premier encodeur, le second encodeur et le décodeur sont obtenus par entraînement selon les étapes suivantes:
extraire (S610) une caractéristique de point clé cible à partir de l'image faciale originale au moyen du premier encodeur;
extraire (S620) une caractéristique d'apparence cible à partir de l'image originale de l'objet d'occlusion au moyen du second encodeur;
synthétiser la caractéristique de point clé cible et la caractéristique d'apparence cible au moyen du décodeur afin de générer une image faciale cible; et
effectuer un entraînement inverse sur le premier encodeur, le second encodeur et le décodeur sur la base d'une fonction déterminée sur la base de l'image faciale originale et de l'image faciale cible; et
utiliser (S200) la première image faciale comme données d'entrée, et utiliser les valeurs de coordonnées du premier point clé ainsi que les informations d'occlusion du premier point clé comme données de sortie, afin d'entraîner un modèle de détection d'occlusion, de sorte que le modèle de détection d'occlusion fournisse, sur la base de toute seconde image faciale d'entrée, des valeurs de coordonnées d'un second point clé compris dans la seconde image faciale ainsi qu'une probabilité d'occlusion du second point clé.

2. Procédé d'entraînement selon la revendication 1, dans laquelle l'étape consistant à obtenir une image originale d'un objet d'occlusion comprenant l'objet d'occlusion, et à extraire un objet d'occlusion cible à partir de l'image originale de l'objet d'occlusion comprend:
obtenir un contour de segmentation de l'objet d'occlusion cible sur la base d'une technologie de segmentation d'image; et
effectuer un calcul de convolution en utilisant le contour de segmentation et l'image originale de l'objet d'occlusion, afin d'obtenir l'objet d'occlusion cible.

3. Procédé d'entraînement selon la revendication 1 ou 2, dans lequel l'étape consistant à utiliser la première image faciale comme données d'entrée, et à utiliser les valeurs de coordonnées du premier point clé ainsi que les informations d'occlusion du premier point clé comme données de sortie pour entraîner un modèle de détection d'occlusion comprend:
entraîner (S210) un premier réseau neuronal, de sorte que le premier réseau neuronal produise des valeurs de coordonnées d'un point clé prédit sur la base de la première image faciale d'entrée;
sélectionner (S220) la sortie d'une couche cachée dans le premier réseau neuronal, utiliser la sortie de la couche cachée comme entrée pour entraîner un second réseau neuronal, et produire une probabilité d'occlusion du point clé prédit;
déterminer (S230) une première fonction de perte du premier réseau neuronal sur la base des coordonnées du point clé prédit et les valeurs de coordonnées du premier point clé, et déterminer une seconde fonction de perte du second réseau neuronal sur la base de la probabilité d'occlusion du point clé prédit et les informations d'occlusion du premier point clé;
déterminer (S240) une fonction de perte globale du modèle de détection d'occlusion sur la base de la première fonction de perte et de la seconde fonction de perte; et
effectuer (S250) un entraînement inverse sur la base de la fonction de perte globale, afin de déterminer un paramètre d'occlusion dans le modèle.

4. Procédé d'entraînement selon la revendication 3, dans lequel une expression de la fonction de perte globale est : $loss = λ 1 ∗ {\sum }_{i}^{n} \sqrt{{p}_{i}} ∗ {l}_{i} + λ 2 ∗ {o}_{i}$ loss (perte)
pᵢ représente une probabilité d'occlusion d'un i^{e} point clé prédit; l₁ représente la première fonction de perte du premier réseau neuronal, oᵢ représente la seconde fonction de perte du second réseau neuronal, et λ₁ et λ₂ représentent respectivement des paramètres empiriques.

5. Procédé de traitement d'images faciales mis en œuvre par ordinateur, comprenant:
entraîner un modèle de détection d'occlusion selon le procédé d'entraînement de l'une quelconque des revendications 1 à 4;
obtenir (S100') une cinquième image faciale à traiter;
entrer (S200') la cinquième image faciale dans le modèle de détection d'occlusion entraîné, et produire des valeurs de coordonnées d'un cinquième point clé dans la cinquième image faciale ainsi qu'une probabilité d'occlusion du cinquième point clé; et
effectuer (S300') un traitement d'embellissement sur la cinquième image faciale sur la base de la probabilité d'occlusion.

6. Appareil d'entraînement de modèle de détection d'occlusion (90), comprenant:
un moyen de construction de données d'apprentissage (91), apte à construire une pluralité d'éléments de données d'apprentissage, dans lequel les données d'apprentissage comprennent une première image faciale à laquelle est ajouté un objet d'occlusion, des valeurs de coordonnées d'un premier point clé dans la première image faciale, et des informations d'occlusion du premier point clé, la construction de la pluralité d'éléments de données d'apprentissage comprenant :
obtenir (S110) une image faciale originale ne comprenant pas l'objet d'occlusion;
obtenir (S120) une image originale d'objet d'occlusion comprenant l'objet d'occlusion, et extraire un objet d'occlusion cible à partir de l'image originale d'objet d'occlusion;
synthétiser (S130) l'objet d'occlusion cible et l'image faciale, afin d'obtenir une première image faciale à laquelle est ajouté l'objet d'occlusion, comprenant:
obtenir (S131') l'image faciale originale comportant un point clé marqué et ne comprenant pas l'objet d'occlusion, ainsi que l'image originale d'objet d'occlusion comportant un point clé dépourvu de marque et comprenant l'objet d'occlusion;
extraire (S132') une caractéristique de point clé à partir de l'image faciale originale au moyen d'un premier encodeur;
extraire (S133') une caractéristique d'apparence à partir de l'image originale d'objet d'occlusion au moyen d'un second encodeur, dans lequel la caractéristique apparente comprend une caractéristique d'objet d'occlusion; et
synthétiser la caractéristique de point clé et la caractéristique d'apparence au moyen d'un décodeur afin de générer, au moyen du décodeur, la première image faciale; et
enregistrer (S140) les valeurs de coordonnées du premier point clé dans la première image faciale ainsi que les informations d'occlusion de chaque premier point clé;
dans lequel le premier encodeur, le second encodeur et le décodeur sont obtenus par entraînement selon les étapes suivantes:
extraire (S610) une caractéristique de point clé cible à partir de l'image faciale originale au moyen du premier encodeur;
extraire (S620) une caractéristique d'apparence cible à partir de l'image originale d'objet d'occlusion au moyen du second encodeur;
synthétiser la caractéristique de point clé cible et la caractéristique d'apparence cible au moyen du décodeur pour générer une image faciale cible; et
effectuer un entraînement inverse sur le premier encodeur, le second encodeur et le décodeur sur la base d'une fonction déterminée sur la base de l'image faciale originale et de l'image faciale cible; et
un moyen d'entraînement de modèle (92), apte à utiliser la première image faciale comme données d'entrée et à utiliser les valeurs de coordonnées du premier point clé ainsi que les informations d'occlusion du premier point clé comme données de sortie, pour entraîner un modèle de détection d'occlusion, de sorte que le modèle de détection d'occlusion fournisse, sur la base de toute seconde image faciale d'entrée, des valeurs de coordonnées d'un second point clé compris dans la seconde image faciale et une probabilité d'occlusion du second point clé.

7. Appareil d'entraînement de modèle de détection d'occlusion selon la revendication 6, dans lequel le moyen comprend:
au moins un processeur; et
au moins une mémoire comprenant un code de programme informatique, ladite au moins une mémoire et le code de programme informatique étant configurés, avec ledit au moins un processeur, pour amener l'appareil à exécuter les opérations.

8. Appareil de traitement d'image faciale (120), comprenant:
un moyen apte à entraîner un modèle de détection d'occlusion selon le procédé d'entraînement de l'une quelconque des revendications 1 à 4;
un moyen d'acquisition d'image (121), apte à obtenir une cinquième image faciale devant être traitée;
un moyen de détection d'occlusion (122), apte à entrer la cinquième image faciale dans le modèle de détection d'occlusion entraîné et à fournir des valeurs de coordonnées d'un cinquième point clé dans la cinquième image faciale ainsi qu'une probabilité d'occlusion du cinquième point clé; et
un moyen d'embellissement (123), apte à effectuer un traitement d'embellissement sur la cinquième image faciale sur la base de la probabilité d'occlusion.

9. Appareil de traitement d'image faciale selon la revendication 8, dans lequel le moyen comprend
au moins un processeur ; et
au moins une mémoire comprenant un code de programme informatique, ladite au moins une mémoire et le code de programme informatique étant configurés, avec ledit au moins un processeur, pour amener l'appareil à exécuter les opérations.

10. Support de stockage lisible par ordinateur, dans lequel le support de stockage lisible par ordinateur stocke des instructions lisibles par ordinateur, et les instructions lisibles par ordinateur sont exécutées par un processeur pour mettre en œuvre les étapes du procédé selon l'une quelconque des revendications 1 à 4.
